(19) Europäisches Patentamt
European Patent Office
Office européen des brevets

(11) EP 4 692 014 A1

(12) EUROPEAN PATENT APPLICATION
published in accordance with Art. 153(4) EPC

(43) Date of publication:
**11.02.2026 Bulletin 2026/07**

(21) Application number: **24806415.6**

(22) Date of filing: **07.05.2024**

(51) International Patent Classification (IPC):
***C03C 25/465*** *(2018.01)* ***G02B 6/02*** *(2006.01)*
***C03C 25/48*** *(2006.01)* ***C03B 37/025*** *(2006.01)*

(52) Cooperative Patent Classification (CPC):
**C03B 37/025; C03C 25/465; C03C 25/48; G02B 6/02**

(86) International application number:
**PCT/CN2024/091524**

(87) International publication number:
**WO 2024/235062 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 CN 202310540156**

(71) Applicant: **Phichem Corporation**
**Shanghai 201908 (CN)**

(72) Inventors:
- **SONG, Shuguo**
  **Shanghai 201908 (CN)**
- **ZHANG, Songya**
  **Shanghai 201908 (CN)**
- **QIU, Yiqun**
  **Shanghai 201908 (CN)**
- **WU, Yan**
  **Shanghai 201908 (CN)**
- **WANG, Miao**
  **Shanghai 201908 (CN)**
- **QIAO, Jianghong**
  **Shanghai 201908 (CN)**

(74) Representative: **Henderson, Helen Lee**
**Withers & Rogers LLP**
**2 London Bridge**
**London SE1 9RA (GB)**

# (54) OPTICAL FIBER COATING COMPOSITION, OPTICAL FIBER, AND PREPARATION METHOD THEREFOR

(57) The present application provides an optical fiber coating composition, and an optical fiber coated with the composition. The optical fiber coating composition comprises, by weight of the composition, 35-95wt% of a photocurable oligomer, 1-45wt% of a photocurable active monomer, 0.5-15wt% of a photoinitiator, and 0.1-10wt% of an auxiliary agent, wherein the photoinitiator comprises at least one compound as shown in general formula I. When the composition is applied to optical fiber coating, the initiation efficiency can be improved and volatiles can be reduced, and the optical fiber using the composition has good environmental aging resistance and signal transmission performance.

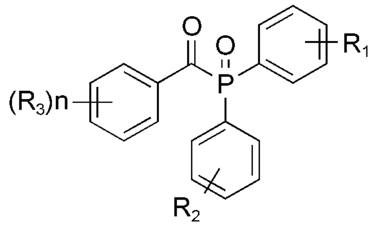

I.



Processed by Luminess, 75001 PARIS (FR)

(Cont. next page)

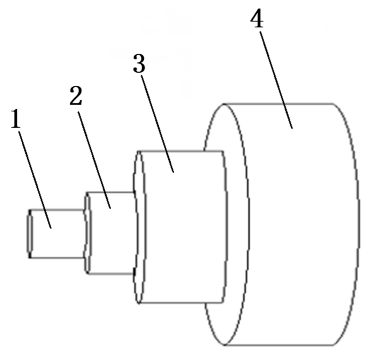


FIG. 1

## Description

This application claims priority to Chinese Patent Application No. 202310540156.8, filed on May 12, 2023 and entitled "OPTICAL FIBER COATING COMPOSITION, OPTICAL FIBER AND PREPARATION METHOD OF OPTICAL FIBER," the disclosure of which is herein incorporated by reference in its entirety.

## TECHNICAL FIELD

The present disclosure relates to an optical fiber communication field coating composition, and more particularly to a composition for optical fiber coating, an optical fiber prepared by coating a composition, and a method for preparing an optical fiber.

## BACKGROUND

Optical fibers are crucial materials for infrastructure construction of information industries. In particular, the optical fibers are a crucial transmission medium and core component in optical communication, and thus play a significant supporting role in the national economy. The optical fiber is a dielectric cylindrical waveguide made, and is capable of confining and guiding an electromagnetic field of an optical wave to propagate forward along an axis of the optical fiber within or near a surface of the optical fiber. In general, the optical fiber is composed of a glass core layer, a glass cladding layer, and an organic coating layer. For communication mono-mode or multi-mode optical fibers, glass parts in the glass core layer and the glass cladding layer are generally doped with high-purity silicon dioxides and germanium dioxides. A quartz glass fiber formed by the glass core layer and the glass cladding layer has a large longitudinal tensile strength, but the quartz glass fiber is brittle and prone to breakage when bent. Meanwhile, the quartz glass fiber is not resistant to moisture and acid and alkali corrosive gases or liquids in the environment. For practicability of the quartz glass fiber, an outer surface of the glass fiber is generally coated with one or more layers of organic polymer materials to effectively protect the quartz glass fiber, such that the environmental reliability and the optical performance of the quartz glass fiber are improved.

CN202110299848 discloses a heat-resistant light-cured optical fiber coating and a preparation method thereof. The optical fiber coating includes: alkoxylated nonylphenol acrylate, 2-hydroxy-2-methyl-1-phenyl-1 acetone, benzoin diethyl ether, 3-aminopropyltrimethoxysilane, polyether acrylate, modified polyurethane, and an organic silicon dioxide slurry. The organic silicon dioxide particles are prepared from organic siloxane, trimethoxy silane, pentaerythritol tetra-3-mercaptopropionate, and 2-acrylamido-2-methyl propane sulfonic acid, and the organic siloxane is one of methyl trimethoxy silane and hexadecyl trimethoxy silane. The optical fiber material is mainly used to protect the optical fiber from being influenced by the external environment and provide the mechanical strength and optical performance. The technical solutions according to the patent has the problems of the low initiation efficiency and the excessive volatile substances during the curing process.

CN201980013837 discloses a coating composition and a cured product formed from the coating composition. The cured product includes an oligomer, an alkoxylated monofunctional acrylate monomer, and preferably, an N-vinyl amide compound. The technical solutions according to the patent has the problems of the low efficiency of chain-free radical reactions and the low wire drawing efficiency.

CN201880036549 discloses a curable composition and a usage thereof. The curable composition is prepared using an admixture of one or more (meth)acrylate-functionalized compounds and one or more reactive comonomers, for example, 1,1-diester-1-alkenes (e.g., methylene malonate), 1,1-diketo-1-alkenes, 1-ester- 1-keto-1-alkene and/or itaconate. The technical solutions according to the patent has the problems of the high power consumption and the excessive volatile substances during the curing process.

CN201780082334 discloses an optical fiber coating with the low modulus and high critical stress. The optical fiber coating includes an oligomeric coating composition formed from isocyanate, the hydroxy acrylate compound, and polyol, such that the optical fiber coating has the low modulus, the high tear strength, and/or the high critical stress. The oligomeric material includes polyether urethane acrylate and a di-adduct compound. The technical solutions according to the patent has the problems of the low efficiency of chain-free radical reactions and the low wire drawing efficiency.

CN201611141284 discloses a polyurethane-acrylate prepolymer. The prepolymer is prepared from the following raw materials: dihydroxy-terminated polysiloxane, isocyanate, acrylate-hydroxy ester, a polymerization inhibitor, and a catalyst, such that the utilization temperature of the existing common polyurethane-acrylate prepolymer is improved. The technical solutions according to the patent has the problems of the low wire drawing efficiency and the excessive volatile substances during the curing process.

In summary, in some practices, the coating of the coating composition has the low initiation efficiency, the low efficiency of chain-free radical reactions, the low wire drawing efficiency, the excessive volatile substances during the curing process, and other industry technical challenges. Moreover, the coating may be potential impacts on life and health.

Therefore, it is urgent to develop a new coating composition for fiber coating based on above coating composition to solve the problems in some practices.

**SUMMARY**

Technical purposes: the present disclosure aims to provide an optical-fiber-coating composition. The optical-fiber-coating composition may improve the initiation efficiency and reduce the volatile substances in a case where the optical-fiber-coating composition is used in fiber coating.

Furthermore, the present disclosure aims to further provide an optical fiber containing an optical-fiber-coating composition and a method for preparing an optical fiber. The optical fiber has an excellent environmental aging-resistance and signal transmission performances.

The technical solutions are as follows. An optical-fiber-coating composition includes: a photo-curing oligomer with 35% to 95% of a weight of the composition, a photo-curing active monomer with 1% to 45% of the weight of the composition, a photo-initiator with 0.5% to 15% of the weight of the composition, and an auxiliary agent with 0.1% to 10% of the weight of the composition, wherein the photo-initiator includes at least one of compounds represented by the following general formula I:

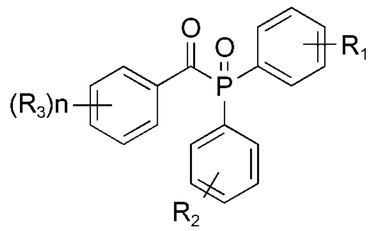

I,

wherein R1, R2, and R3 are same or different, and each of R1, R2, and R3 is independently selected from substituted or unsubstituted $C_{1-5}$ alkyl or alkoxy, where a substituent is selected from $C_{1-3}$ alkyl or alkoxy;

n is equal to 1, 2, or 3, the $C_{1-5}$ alkyl is selected from methyl, ethyl, propyl, isopropyl, n-butyl, isobutyl, sec-butyl, tert-butyl, n-pentyl, $-CH(CH_3)CH_2CH_2CH_3$, - $CH_2CH(CH_3)CH_2CH_3$, $-CH_2CH_2CH(CH_3)_2$, $-CH(C_2H_5)CH_2CH_3$, $-C(CH_3)_2CH_2CH_3$, - $CH(CH_3)CH(CH_3)_2$, or $-CH_2C(CH_3)_3$, and the $C_{1-5}$ alkoxy is selected from methoxy, ethoxy, propoxy, butoxy, or pentyloxy.

In some embodiments, R3 is selected from methyl, ethyl, propyl, or isopropyl. In some embodiments, R3 is methyl.

The thermal stability of the initiator is further enhanced after the alkyl is introduced into the structure, such that the volatilization of the initiator during the photo-curing process in reduced.

In some embodiments of the present disclosure, a substituent of R3 may be at an ortho, meta, or para position; in some embodiments of the present disclosure, the substituent of R3 is an ortho or para position.

In some embodiments of the present disclosure, n is equal to 3.

In some embodiments of the present disclosure, the photo-initiator comprises at least one compound represented by the following general formula II:

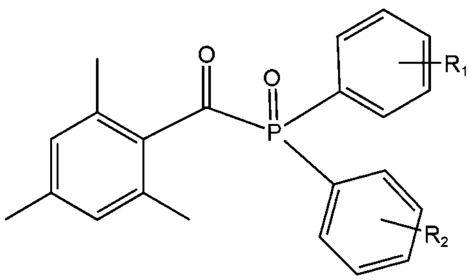

II.

In some embodiments of the present disclosure, each of R1 and R2 is independently selected from methyl, ethyl, propyl, or isopropyl. In some embodiments of the present disclosure, each of R1 and R2 is methyl.

In some embodiments of the present disclosure, substituents of R1 and R2 may be at ortho, meta, or para positions; in some embodiments of the present disclosure, the substituents of R1 and R2 are para positions.

In some embodiments of the present disclosure, R1 and R2 are para-substituted methyl, such that the wavelength sensitivity of the chemical reaction and the efficiency of free chain reaction are improved, and the volatility

of the composition and potential health hazards are addressed.

Two methyl groups are added at para positions of two benzene rings bonded to the phosphorus-oxygen group. The methyl groups and the benzene rings form a σ-π hyperconjugation structure. Compared with the conjugation structure of the benzene rings, the σ-π hyperconjugation structure has a low conjugation energy and a higher activity, and is prone to polymerization in a case where free radicals are generated due to irradiation, such that the cross-linking density of the system and the curing efficiency are improved, and the volatilization of small molecule monomers in the system is reduced.

The photo-initiator in the embodiments of the present disclosure comprises one or more compounds represented by the general formula I.

In some embodiments of the present disclosure, the photo-initiator comprises at least one compound represented by the general formula II.

In some embodiments of the present disclosure, the compound represented by the general formula I accounts for 0.5% to 15% of the weight of the optical-fiber-coating composition, for example, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 11%, 12%, 13%, 14%, 15%, or a range between any two of the values.

In some embodiments of the present disclosure, the compound represented by the general formula I accounts for 0.5% to 8% of the weight of the optical-fiber-coating composition. In a case where a proportion of the compound represented by the general formula I is within the range, the impact of residual free radicals on the aging performance and the yellowing resistance are further reduced.

In some embodiments of the present disclosure, the compound represented by the general formula I is further cooperated with one or more of the following photo-initiators: phenyl bis(2,4,6 trimethyl benzoyl)-phosphine oxide, 1-hydroxycyclohexyl phenyl ketone, 2-hydroxy-2-methyl-1-phenyl-1-propanone, diphenyl ketone, 2,2-dimethoxy-2-phenyl acetophenone, 2-hydroxy-4'-(2-hydroxyethoxy)-2-methyl propiophenone, 2-isopropyl thioxanthone, or 2,4-diethyl-9H-thioxanthen-9-one. In some embodiments, the compound represented by the general formula I is further cooperated with one, two, three, or four of the above photo-initiators.

In some embodiments of the present disclosure, the photo-initiator cooperated with the compound represented by the general formula I accounts for not greater than 5% of the weight of the optical-fiber-coating composition.

In some embodiments of the present disclosure, according to the weight of the composition, the coating composition includes a photo-curing oligomer with 35% to 95% of the weight of the composition, for example, 35%, 38%, 40%, 42%, 45%, 48%, 50%, 53%, 55%, 58%, 60%, 63%, 65%, 68%, 70%, 72%, 75%, 78%, 80%, 82%, 85%, 88%, 90%, 92%, 95%, or a range between any two of the values.

In some embodiments of the present disclosure, the photo-curing oligomer accounts for 50% to 95% of the weight of the optical-fiber-coating composition. In a case where a proportion of the photo-curing oligomer is within the range, an appropriate film-forming thickness is achieved, and the environmental aging performance and volatility are further improved.

In some embodiments of the present disclosure, the photo-curing oligomer includes at least one of a polyurethane acrylate oligomer or an epoxy acrylate oligomer.

In some embodiments of the present disclosure, the polyurethane acrylate oligomer is one or more of a monofunctional polyurethane acrylate oligomer, a bifunctional polyurethane acrylate oligomer, or a trifunctional polyurethane acrylate oligomer. In some embodiments, the polyurethane acrylate oligomer is the bifunctional polyurethane acrylate oligomer or the trifunctional polyurethane acrylate oligomer.

In some embodiments of the present disclosure, the epoxy acrylate oligomer is one or more of a monofunctional epoxy acrylate oligomer, a bifunctional epoxy acrylate oligomer, or a trifunctional epoxy acrylate oligomer. In some embodiments, the epoxy acrylate oligomer is the bifunctional epoxy acrylate oligomer or the trifunctional epoxy acrylate oligomer.

The polyurethane acrylate oligomer according to the present disclosure is prepared by reacting diisocyanate and hydroxyl-containing acrylic ester. During the preparation process, a chain extender is added to the reactants to increase a molecular chain length of the polyurethane acrylate oligomer.

In some embodiments of the present disclosure, the chain extender is selected from at least one of polyester glycol, alkyl glycol, and polyether glycol. In some embodiments, the chain extender is polyether glycol.

In some embodiments of the present disclosure, the polyurethane acrylate oligomer is a single oligomer, or a combination of various types of oligomers.

In some embodiments of the present disclosure, the polyurethane acrylate oligomer is an unpolymerized polyurethane acrylate oligomer.

In some embodiments of the present disclosure, the polyurethane acrylate oligomer is a combination of at least one unpolymerized polyurethane acrylate oligomer and at least one polymerized polyurethane acrylate oligomer. The polyurethane acrylate oligomer may further coordinate and balance the strength and elongation of the cured coating composition.

In some embodiments of the present disclosure, diisocyanate is selected from toluene diisocyanate (TDI), iso-phorone diisocyanate (IPDI), 4,4'-diisocyanate di-cyclohexyl methane (HMDI), diphenylmethane diisocyanate (MDI), and hexamethylene diisocyanate (HDI).

In some embodiments of the present disclosure, hydroxyl-containing acrylic ester is selected from at least one of hydroxyethyl acrylate (HEA), hydroxypropyl acrylate (HPA), 2-hydroxyethyl methacrylate (HEMA), or 2-hydroxypropyl methacrylate (HPMA).

In some embodiments of the present disclosure, the epoxy acrylate oligomer is acquired by reacting a bisphenol A epoxy resin with a carboxyl-containing photopolymerizable compound.

The carboxyl-containing photopolymerizable compound is a compound that contains a carboxyl at an end and a photo-initiateable double bond at another end.

In some embodiments of the present disclosure, the compound that contains a carboxyl at an end and a photo-initiateable double bond at another end may be acrylic acid, methacrylic, or, a compound acquired by reacting anhydride with the hydroxyl acrylate.

The anhydride is selected from at least one of succinic anhydride, maleic anhydride, phthalic anhydride, or tetrahydrophthalic anhydride.

The hydroxy acrylate compound is selected from HEA, HPA, HEMA, and HPMA.

In some embodiments of the present disclosure, according to the weight of the composition, the coating composition includes a photo-curing active monomer with 1% to 45% of the weight of the composition, for example, 1%, 5%, 10%, 12%, 15%, 18%, 20%, 23%, 25%, 28%, 30%, 33%, 35%, 38%, 40%, 42%, 45%, or a range between any two of the values.

The photo-curing active monomer comprises at least one of a monofunctional photo-curing active monomer or a multifunctional photo-curing active monomer. In some embodiments of the present disclosure, the multifunctional photo-curing active monomer is a bifunctional photo-curing active monomer and a trifunctional photo-curing active monomer.

In some embodiments of the present disclosure, the monofunctional monomer includes one or more selected from 2-phenoxyethyl acrylate (PHEA), isobornyl acrylate (IBOA), isodecyl acrylate, isooctyl acrylate, polyethylene glycol o-phenylphenyl ether acrylate (OPPEA), N-vinylcaprolactam, and nonylphenol ethoxylate acrylate.

In some embodiments of the present disclosure, according to the weight of the composition, the coating composition includes a monofunctional photo-curing active monomer with 0% to 36% of the weight of the composition, for example, 0%, 1%, 5%, 10%, 12%, 15%, 18%, 20%, 23%, 25%, 28%, 30%, 33%, 36%, or a range between any two of the values.

In some embodiments of the present disclosure, the monofunctional photo-curing active monomer accounts for 0% to 20% of the weight of the optical-fiber-coating composition. In a case where a proportion of the monofunctional monomer is great, a curing speed is affected, and the volatility is great.

The bifunctional photo-curing active monomer includes 1,6-Hexanediol diacrylate (HDDA), tripropylene glycol diacrylate (TPGDA), and dipropylene glycol diacrylate (DPGDA).

The trifunctional photo-curing active monomer includes trimethylolpropane triacrylate (TMPTA).

In some embodiments of the present disclosure, the auxiliary agent comprises one or more selected from a silane coupling agent, an active amine auxiliary agent, and a leveling agent. The silane coupling agent is one or more selected from mercaptopropyl trimethoxy silane and 3-chloropropyl trimethoxy silane, the active amine auxiliary agent is one or more selected from ethylenediamine and amine-modified acrylate, and the leveling agent is one or more selected from organic silicone-based leveling agent and an acrylic-based leveling agent.

In some embodiments of the present disclosure, according to the weight of the composition, the coating composition includes an auxiliary agent with 0.1% to 10% of the weight of the composition (for example, a range from 0.1% to 5%, a range from 0.5% to 10%, a range from 0.5% to 5%, a range from 1% to 5%, or any value within the ranges). In some embodiments, a proportion of the auxiliary agent is 0.1%, 0.25%, 0.5%, 0.75%, 1%, 2%, 3%, 4%, 5%, 6%, 7%, 8%, 9%, 10%, or a range between any two of the values.

The optical-fiber-coating composition according to the present disclosure is suitable for an ultraviolet curing wavelength within the range from 200 nm to 405 nm.

The present disclosure aims to further provide an optical fiber containing an optical-fiber-coating composition.

The optical fiber comprises a fiber core, a cladding layer, a first coating layer, and a second coating layer, wherein the cladding layer wraps around an outer layer of the fiber core, the first coating layer wraps around an outer layer of the cladding layer, and the second coating layer wraps around an outer layer of the first coating layer.

The fiber core and the cladding layer include the silicon dioxide, the germanium dioxide, or a material doped with the silicon dioxide and the germanium dioxide.

At least one of the first coating layer or the second coating layer is formed by ultraviolet curing the optical-fiber-coating composition.

In some embodiments of the present disclosure, the first coating layer is formed by ultraviolet curing the optical-fiber-coating composition according to the present disclosure.

In some embodiments of the present disclosure, the second coating layer is formed by ultraviolet curing the

optical-fiber-coating composition according to the present disclosure.

In some embodiments of the present disclosure, the first coating layer and the second coating layer are formed by ultraviolet curing the optical-fiber-coating composition according to the present disclosure.

The present disclosure aims to further provide a method for preparing an optical fiber containing an optical-fiber-coating composition. The preparing method includes:

1) placing a preform on a chuck of a feed mechanism, placing the preform into a high-temperature heating furnace to soften and melt the preform, such that the preform coheres into a ball-contained filament that becomes thinner vertically under a weight, and a bare optical fiber is formed; and
2) the bare optical fiber passing through a mold coated with a first coating composition, a mold coated with a second coating composition, a photo-curing oven, bypassing a tension wheel, a guide wheel, and a traction wheel on a drawing machine, and finally windings around a reel.

In some embodiments of the present disclosure, in a case where the bare optical fiber passes through the mold coated with the first coating composition, the bare optical fiber passes through the photo-curing oven and the mold coated with the second coating composition, and then passes through the photo-curing oven again, such that curing is finished.

In some embodiments of the present disclosure, a speed of the bare optical fiber passing through the photo-curing oven ranges from 1500 m/min to 3500 m/min.

In some embodiments of the present disclosure, a curing light source of the photo-curing oven is an ultraviolet light with a wavelength ranging from 200 to 405 nm.

Compared with some practices, the present disclosure has the following advantages.

The optical-fiber-coating composition represented by the general formula I according to the present disclosure solves the low sensitivity to chemical reaction wavelengths of traditional photo-initiators, the low efficiency of free radical chain reaction, and the excessive volatile substances in some practices, and further avoids the potential health impacts caused by traditional photo-initiators such as photo-initiator TPO.

The optical-fiber-coating composition according to the present disclosure has the high ultraviolet curing efficiency and is suitable for high-speed drawing optical fiber preparation at a speed greater than 2500 m/min.

The coating layer cured by the optical-fiber-coating composition according to the present disclosure provides the enhanced environmental aging-resistance for the optical fiber, has the high strength, protects the cladding layer of the optical fiber from damage, reduces the attenuation of optical signals, and has a promising application prospect in the optical fiber preparation industry.

The optical fiber according to the present disclosure improves the environmental reliability of the optical fiber, is environmentally friendly and healthier, and is suitable for largescale production.

## BRIEF DESCRIPTION OF DRAWINGS

For a clearer description of the technical solutions according to the embodiments of the present disclosure, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic structural diagram of an optical fiber containing an optical-fiber-coating composition.
The reference numerals are as follows:
1-fiber core; 2-cladding layer; 3-first coating layer; 4-second coating layer.

## DETAILED DESCRIPTION

The present disclosure is detailed in conjunction with the accompanying drawings and embodiments, and various aspects described hereinafter in conjunction with the accompanying drawings and embodiments are merely exemplary and should not be construed as limitations on the scope of protection of the present disclosure.

In the present disclosure, unless otherwise specified, all the proportions are by weight, and all temperatures are in degrees Celsius.

Test methods:

<u>Volatilization amount test method:</u> the slide was placed in the oven, dried for 30 minutes, taken out from the oven, put in the dryer to cool down to the room temperature, and weighed and record as M1. The coating sample was coated onto the slide to form a coating film with an appropriate thickness, and a total weigh of the slide and the coating was weighted

and recorded as M2. The slide was placed in a container box with the upper layer being high-purity quartz glass, the nitrogen gas was introduced for 1 minute to expel the air inside the container, and then was cured under the ultraviolet light. The light source energy was set as 1500 $mJ/cm^2$, and the speed of the conveyor was set as 17 m/min. Upon curing, the nitrogen gas was introduced for 1 minute to remove the volatile gases, and then the total weight of the slide and the cured coating was weighted and recorded as M3. In this case, the volatilization amount of the sample is equal to (M2 - M3) / (M2 - M1) * 100%.

Test method of the curing speed in examples: the coating sample was coated onto the slide to form a coating film with an appropriate thickness, and was exposed to a UV light source for 1 s. The infrared spectrum of the surface of the irradiated sample was acquired using an infrared spectrograph, and the absorption peak at 1410 cm-1 in the infrared spectrum was integrated, and then the standard absorption peak (such as the absorption peak at 1730 $cm^{-1}$) was integrated. The integral ratio of the areas of the two absorption peaks, that is, S1410/S1730, was defined as the AU sample. The uncured coating sample was also tested in the same way, and the integral ratio of the areas of the two absorption peaks, that is, L1410/L1730, was defined as the AU liquid. The curing degree of the coating film was calculated using the formula: ((AU liquid - AU sample) / AU liquid) * 100%. The curing speed is represented by the curing degree within 1 s irradiation time.

Test method of the curing speed in application examples:

1) A small amount of liquid coating from the inner and outer layers were dropped onto the crystal surface using the dropper, and the infrared spectrum of the liquid coating was tested.
2) The surface of the prepared optical fiber was attached onto the crystal surface and pressed down firmly (note: the optical fiber should not be spread out) , and the infrared spectrum upon curing of the outer coating was tested.
3) The coating layer of the optical fiber tested in step 2 was cut off along the glass surface of the optical fiber using a blade, and attached to the crystal surface to test the infrared spectrum of the cured inner coating.
4) The carbon-hydrogen absorption peak at 1410$cm^{-1}$ was integrated, the standard absorption peak (such as the carbonyl absorption peak at 1730$cm^{-1}$) was integrated, and the ratio of the areas of the two absorption peaks was defined as:

$$\text{AU liquid} = \text{A liquid } (1410\ cm^{-1}) / \text{A liquid } (1730\ cm^{-1}).$$

$$\text{AU sample} = \text{A fiber sample } (1410\ cm^{-1}) / \text{A fiber sample } (1730\ cm^{-1}).$$

$$\text{The curing degree} = ((\text{AU liquid} - \text{AU sample}) / \text{AU liquid}) * 100\%.$$

Strength of optical fiber test method: reference may be made to test methods for mechanical properties in Part 3 of the GB/T15972.3-1998 general specification for optical fibers.

Attenuation of optical fiber test method: reference may be made to test methods for transmission characteristics and optical characteristics in Part 4 of the GB/T15972.4-1998 general specification for optical fibers.

Aging condition of the optical fiber: sored at 85 °C and 85% relative humidity (R.H.) for one month.

In the embodiments of the present disclosure, the compounds are selected as follows.

The photo-curing oligomer:

Oligomer 1: a polyurethane acrylate oligomer, which is acquired by directly blocking TDI with HEMA.
Oligomer 2: a polyether polyurethane acrylate oligomer, which is acquired by reacting polyether glycol with MDI and then blocking the reactor with HPMA.
Oligomer 3: an epoxy acrylate oligomer, which is selected from epoxy acrylate with SM6104 type.
Oligomer 4: a modified epoxy acrylate oligomer, which is acquired by reacting phthalic anhydride with HEMA and then reacting the bisphenol A epoxy resin.

The photo-initiator:

Photo-initiator 1: the compound represented by the general formula I, wherein R1, R2, and R3 are methyl, and R1 and R2 are para-substituted; and n is equal to 3, and the substituent is an ortho or para position.
Photo-initiator 2: the photo-initiator 2959.
Photo-initiator 3: the photo-initiator 194.
Photo-initiator 4: the photo-initiator TPO.

The auxiliary agent:

Auxiliary agent 1: organic silicone-based leveling agent Dow Corning DC-56.
Auxiliary agent 2: active amine auxiliary initiator agent, that is, amine-modified acrylate,, selected from Sartomer CN550.

Embodiment 1:

The composition of the coating composition 1 is listed in Table 1.

Table 1

| Component | Weight percentage |
|---|---|
| Oligomer 2 | 95% |
| Nonylphenol ethoxylate acrylate | 1% |
| Initiator 1 | 2% |
| Auxiliary agent 2 | 1% |
| 3-chloropropyl trimethoxy silane | 1% |

Embodiment 2:

The composition of the coating composition 2 is listed in Table 2.

Table 2

| Component | Weight percentage |
|---|---|
| Oligomer 2 | 45% |
| Nonylphenol ethoxylate acrylate | 22% |
| PHEA | 20% |
| Initiator 1 | 6% |
| Photo-initiator 2 | 1% |
| Auxiliary agent 2 | 4% |
| 3-chloropropyl trimethoxy silane | 2% |

Embodiment 3:

The composition of the coating composition 3 is listed in Table 3.

Table 3

| Component | Weight percentage |
|---|---|
| Oligomer 1 | 30% |
| Modified epoxy acrylate | 20% |
| Oligomer 2 | 20% |
| TPGDA | 23% |
| TMPTA | 2% |
| Oligomer 2 | 4.5% |
| Organic silicone-based leveling agent | 0.5% |

Embodiment 4:

The composition of the coating composition 4 is listed in Table 42.

Table 4

| Component | Weight percentage |
|---|---|
| Oligomer 3 | 20% |
| Oligomer 2 | 15% |
| PHEA | 20% |
| TPGDA | 25% |
| Initiator 1 | 9% |
| Photo-initiator 3 | 1% |
| Auxiliary agent 2 | 8% |
| Auxiliary agent 1 | 2% |

Embodiment 5:

The composition of the coating composition 5 is listed in Table 5.

Table 5

| Component | Weight percentage |
|---|---|
| Oligomer 3 | 30% |
| Oligomer 2 | 30% |
| TPGDA | 33% |
| Initiator 1 | 6% |
| Auxiliary agent 1 | 1% |

Embodiment 6:

The composition of the coating composition 6 is listed in Table 6.

Table 6

| Component | Weight percentage |
|---|---|
| Oligomer 1 | 34% |
| Oligomer 3 | 30% |
| TPGDA | 20% |
| Initiator 1 | 15% |
| Auxiliary agent 1 | 1% |

Embodiment 7:

The composition of the coating composition 7 is listed in Table 7.

Table 7

| Component | Weight percentage |
|---|---|
| Oligomer 1 | 19.5% |

(continued)

| Component | Weight percentage |
|---|---|
| Oligomer 4 | 40% |
| PHEA | 3% |
| TPGDA | 27% |
| Initiator 1 | 0.5% |
| Auxiliary agent 2 | 9.0% |
| Auxiliary agent 1 | 1.0% |

Comparison Example 1

The composition of the comparison coating composition 1 is listed in Table 8.

Table 8

| Component | Weight percentage |
|---|---|
| Oligomer2 | 72% |
| PHEA | 20% |
| Photo-initiator4 | 4% |
| Photo-initiator2 | 1% |
| Auxiliary agent2 | 1% |
| 3-chloropropyl trimethoxy silane | 2% |

Comparison Example 2

The composition of the comparison coating composition 2 is listed in Table 9.

Table 9

| Component | Weight percentage |
|---|---|
| Oligomer 1 | 30% |
| Oligomer4 | 20% |
| Oligomer2 | 20% |
| TPGDA | 23% |
| TMPTA | 2% |
| Photo-initiator4 | 4.5% |
| Auxiliary agent1 | 0.5% |

Comparison Example 3

The composition of the comparison coating composition 3 is listed in Table 10.

Table 10

| Component | Weight percentage |
|---|---|
| Oligomer 1 | 15% |
| Oligomer4 | 15% |
| TPGDA | 43% |

(continued)

| Component | Weight percentage |
|---|---|
| TMPTA | 2% |
| Photo-initiatorTM0 | 10% |
| Photo-initiator3 | 5% |
| Auxiliary agent1 | 5% |
| Auxiliary agent2 | 5% |

Comparison Example 4

The composition of the comparison coating composition 4 is listed in Table 11.

Table 11

| Component | Weight percentage |
|---|---|
| Oligomer3 | 25% |
| Oligomer2 | 20% |
| TPGDA | 50% |
| Initiator 1 | 3% |
| Auxiliary agent1 | 2% |

The curing speeds and the volatilization amounts of the coating compositions in Examples 1 to 7 and Comparison examples 1 to 4 were tested respectively. The results are listed in Table 12.

Table 12

| Item | Curing speed | Volatilization amount |
|---|---|---|
| Example 1 | 93%/s | 0.20% |
| Example 2 | 91%/s | 0.81% |
| Example 3 | 93%/s | 0.24% |
| Example 4 | 91%/s | 0.62% |
| Example 5 | 93%/s | 0.27% |
| Example 6 | 92%/s | 0.53% |
| Example 7 | 92%/s | 0.35% |
| Comparison example 1 | 82%/s | 1.42% |
| Comparison example 2 | 84%/s | 1.33% |
| Comparison example 3 | 89%/s | 0.85% |
| Comparison example 4 | 88%/s | 1.02% |

The coating compositions in Examples 1 to 7 and Comparison examples 1 to 4 were processed in the following preparation method to form Application examples 1 to 8 and Application comparison example 1 to achieve coating of the optical fiber, and the performances of the optical fiber were tested.

Preparation method: The preform was placed on the chuck of the feed mechanism and then placed into the high-temperature heating furnace to soften and melt the preform, such that the preform cohered into the ball-contained filament that becomes thinner vertically under a weight, and the bare optical fiber was formed. The bare optical fiber passed through the mold coated with the first coating composition, the mold coated with the second coating composition, the photo-curing oven, bypassed the tension wheel, the guide wheel, and the traction wheel on the drawing machine, and finally winded around the reel. The drawing speed was 3000 m/min. The curing light source was the LED light source with the wavelength

of 395 nm.

Application examples 1 to 8 and Application comparison example 1 only differ in the coating composition used for the first coating layer and the second coating layer, as listed in Table 13.

Table 13

| Item | First coating layer | Second coating layer |
|---|---|---|
| Application example 1 | Example 1 | Comparison example 2 |
| Application example 2 | Comparison example 1 | Example 3 |
| Application example 3 | Example 2 | Example 4 |
| Application example 4 | Example 2 | Example 3 |
| Application example 5 | Example 2 | Example 5 |
| Application example 6 | Example 1 | Example 4 |
| Application example 7 | Example 1 | Example 6 |
| Application example 8 | Example 1 | Example 3 |
| Application comparison example 1 | Comparison example 1 | Comparison example 2 |

The test results of Application examples are listed in Table 14.

Table 14

| Item | Curing degree of first coating layer | Curing degree of second coating layer | attenuation at 1310 nm | attenuation at 1550 nm | Strength prior to aging/Mpa | Strength upon aging /Mpa |
|---|---|---|---|---|---|---|
| Application example 1 | 97% | 91% | 0.336 | 0.195 | 5.13 | 5.07 |
| Application example 2 | 92% | 97% | 0.338 | 0.198 | 5.11 | 5.04 |
| Application example 3 | 95% | 95% | 0.330 | 0.192 | 5.20 | 5.15 |
| Application example 4 | 95% | 97% | 0.324 | 0.183 | 5.24 | 5.2 |
| Application example 5 | 95% | 97% | 0.324 | 0.184 | 5.22 | 5.17 |
| Application example 6 | 97% | 95% | 0.321 | 0.182 | 5.28 | 5.25 |
| Application example 7 | 97% | 95% | 0.322 | 0.182 | 5.25 | 5.22 |
| Application example 8 | 97% | 97% | 0.312 | 0.171 | 5.35 | 5.33 |
| Application comparison example 1 | 92% | 91% | 0.373 | 0.224 | 4.96 | 4.65 |

The drawing speeds in Application examples 1, 3, and 8 and Application comparison example 1 were respectively adjusted to 2500 m/min and 3500 m/min to achieve the coating and curing of the optical fiber, and the curing degrees were tested. The results are listed in Table 15.

Table 15

| Item | | Curing degree of first coating layer of optical fiber | Curing degree of second coating layer of optical fiber |
|---|---|---|---|
| Drawing speed at 2500m/min | Application example 1 | 97% | 92% |
| | Application example 3 | 96% | 95% |
| | Application example 8 | 97% | 97% |
| | Application comparison example 1 | 92% | 92% |
| Drawing speed at 3500m/min | Application example 1 | 97% | 90% |
| | Application example 3 | 95% | 95% |
| | Application example 8 | 97% | 97% |
| | Application comparison example 1 | 90% | 90% |

Based on the results of the examples and the comparison examples, in a case where the compound represented by the general formula I is added to the coating composition and the optical fiber, the volatile substances are reduced, the requirement of high-speed optical fiber drawing is satisfied, the curing speed of the coating layer and the curing degree of the optical fiber are effectively improved, the signal attenuation of the optical fiber is reduced, the high-temperature and high-humidity resistance are enhanced, and the environmental reliability of the optical fiber is increased. In the trend of increased drawing speed of the optical fiber, a promising application prospect is provided.

Described above are exemplary embodiments of the present disclosure and are not intended to limit the present disclosure. Within the spirit and principles of the present disclosure, any variations, equivalent substitutions, improvements and the like shall be included in the protection scope of the present disclosure.

## Claims

1. An optical-fiber-coating composition, comprising: a photo-curing oligomer with 35% to 95% of a weight of the composition, a photo-curing active monomer with 1% to 45% of the weight of the composition, a photo-initiator with 0.5% to 15% of the weight of the composition, and an auxiliary agent with 0.1% to 10% of the weight of the composition, wherein the photoinitiator comprises at least one of compounds represented by a following general formula I:

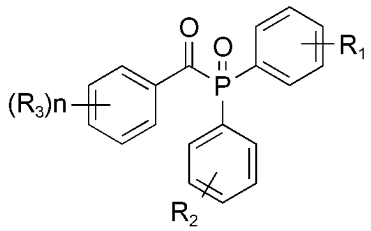

I,

wherein R1, R2, and R3 are same or different, and each of R1, R2, and R3 is independently selected from substituted or unsubstituted $C_{1-5}$ alkyl or alkoxy, where a substituent is selected from $C_{1-3}$ alkyl or alkoxy; n is equal to 1, 2, or 3, the $C_{1-5}$ alkyl is selected from methyl, ethyl, propyl, isopropyl, n-butyl, isobutyl, sec-butyl, tert-butyl, n-pentyl, $-CH(CH_3)CH_2CH_2CH_3$, $-CH_2CH(CH_3)CH_2CH_3$, $-CH_2CH_2CH(CH_3)_2$, $-CH(C_2H_5)CH_2CH_3$, $-C(CH_3)_2CH_2CH_3$, $-CH(CH_3)CH(CH_3)_2$, or $-CH_2C(CH_3)_3$, and the $C_{1-5}$ alkoxy is selected from methoxy, ethoxy, propoxy, butoxy, or pentyloxy.

2. The optical-fiber-coating composition according to claim 1, wherein each of R1, R2, and R3 is independently selected from methyl, ethyl, propyl, or isopropyl.

3. The optical-fiber-coating composition according to claim 1, wherein the photo-curing oligomer is selected from at least one of a polyurethane acrylate oligomer or an epoxy acrylate oligomer.

4. The optical-fiber-coating composition according to claim 3, wherein the polyurethane acrylate oligomer is one or more of a monofunctional polyurethane acrylate oligomer, a bifunctional polyurethane acrylate oligomer, or a trifunctional

polyurethane acrylate oligomer.

5. The optical-fiber-coating composition according to claim 3, wherein the epoxy acrylate oligomer is one or more of a monofunctional epoxy acrylate oligomer, a bifunctional epoxy acrylate oligomer, or a trifunctional epoxy acrylate oligomer.

6. The optical-fiber-coating composition according to claim 1, wherein the photo-curing active monomer comprises at least one of a monofunctional photo-curing active monomer or a multifunctional photo-curing active monomer.

7. The optical-fiber-coating composition according to any one of claims 1 to 6, wherein the photo-initiator comprises one or more compounds represented by the general formula I.

8. The optical-fiber-coating composition according to claim 7, wherein the photo-initiator further comprises one or more of: phenyl bis(2,4,6 trimethyl benzoyl)-phosphine oxide, 1-hydroxycyclohexyl phenyl ketone, 2-hydroxy-2-methyl-1-phenyl-1-propanone, diphenyl ketone, 2,2-dimethoxy-2-phenyl acetophenone, 2-hydroxy-4'-(2-hydroxyethoxy)-2-methyl propiophenone, 2-isopropyl thioxanthone, or 2,4-diethyl-9H-thioxanthen-9-one.

9. The optical-fiber-coating composition according to claim 1, wherein the auxiliary agent comprises one or more selected from a silane coupling agent, an active amine auxiliary agent, and a leveling agent.

10. An optical fiber containing the optical-fiber-coating composition according to any one of claims 1 to 9, wherein the optical fiber comprises a fiber core, a cladding layer, a first coating layer, and a second coating layer, wherein the cladding layer wraps around an outer layer of the fiber core, the first coating layer wraps around an outer layer of the cladding layer, the second coating layer wraps around an outer layer of the first coating layer, and at least one of the first coating layer or the second coating layer is formed by ultraviolet curing the optical-fiber-coating composition.

11. A method for preparing an optical fiber containing the optical-fiber-coating composition according to any one of claims 1 to 9, wherein the method comprises:

    1) placing a preform on a chuck of a feed mechanism, placing the preform into a high-temperature heating furnace to soften and melt the preform, such that the preform coheres into a ball-contained filament that becomes thinner vertically under a weight, and a bare optical fiber is formed; and
    2) the bare optical fiber passing through a mold coated with a first coating composition, a mold coated with a second coating composition, a photo-curing oven, bypassing a tension wheel, a guide wheel, and a traction wheel on a drawing machine, and finally windings around a reel.

12. The preparing method according to claim 11, wherein in a case where the bare optical fiber passes through the mold coated with the first coating composition, the bare optical fiber passes through the photo-curing oven and the mold coated with the second coating composition, and then passes through the photo-curing oven again, such that curing is finished.

13. The preparing method according to claim 11, wherein a speed of the bare optical fiber passing through the photo-curing oven ranges from 1500 m/min to 3500 m/min.

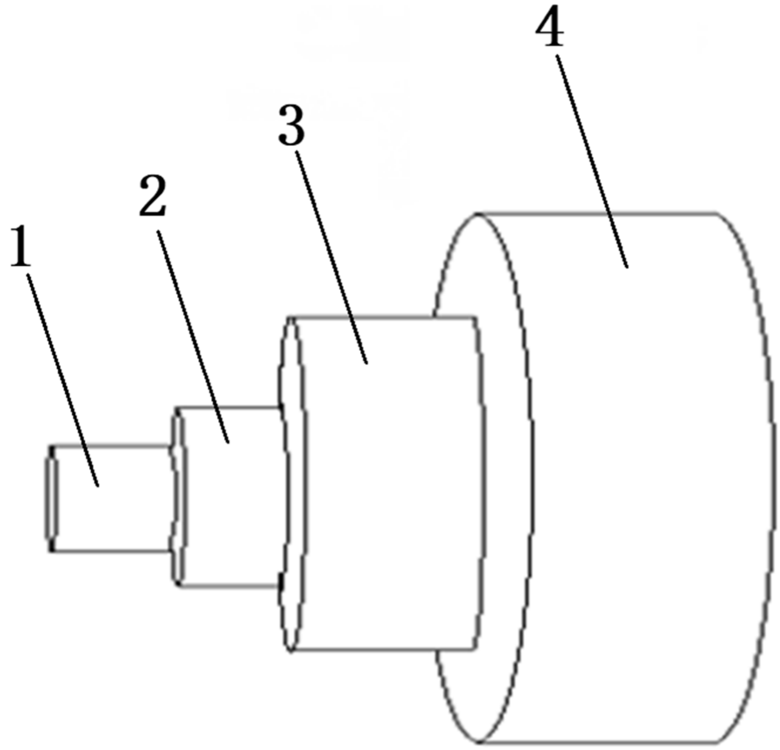


FIG. 1

**INTERNATIONAL SEARCH REPORT**

International application No. **PCT/CN2024/091524**

**A. CLASSIFICATION OF SUBJECT MATTER**

C03C25/465(2018.01)i；G02B6/02(2006.01)i；C03C25/48(2006.01)i；C03B37/025(2006.01)i

According to International Patent Classification (IPC) or to both national classification and IPC

**B. FIELDS SEARCHED**

Minimum documentation searched (classification system followed by classification symbols)

IPC：C03B, C03C, G02B

Documentation searched other than minimum documentation to the extent that such documents are included in the fields searched

Electronic data base consulted during the international search (name of data base and, where practicable, search terms used)

EXTXT, ENTXTC, VEN, CNTXT, ISI, CNKI: 光纤, 涂覆, 涂层, 引发剂, 氧化膦, fiber, fibre, coating, film, initiator, phosphine oxide

**C. DOCUMENTS CONSIDERED TO BE RELEVANT**

| Category* | Citation of document, with indication, where appropriate, of the relevant passages | Relevant to claim No. |
|---|---|---|
| Y | CN 106010144 A (SHANGHAI PHICHEM PHOTOELECTRIC MATERIAL CO., LTD.) 12 October 2016 (2016-10-12)<br>claims 1-10, and description, paragraph 0003 | 1-13 |
| Y | US 4447520 A (BASF AG.) 08 May 1984 (1984-05-08)<br>claims 1-6, and description, column 2, lines 17-32, and table 1 | 1-13 |
| PX | CN 117209168 A (SHANGHAI PHICHEM MATERIAL TECHNOLOGY CO., LTD.) 12 December 2023 (2023-12-12)<br>claims 1-13 | 1-13 |
| PX | CN 117209674 A (SHANGHAI PHICHEM MATERIAL TECHNOLOGY CO., LTD.) 12 December 2023 (2023-12-12)<br>claims 1-14 | 1-13 |
| A | CN 111268923 A (YANGTZE OPTICAL FIBRE AND CABLE JOINT STOCK CO., LTD.) 12 June 2020 (2020-06-12)<br>entire document | 1-13 |

☐ Further documents are listed in the continuation of Box C.    ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 August 2024** | **08 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/091524**

| Patent document cited in search report | | | Publication date (day/month/year) | Patent family member(s) | | | Publication date (day/month/year) |
|---|---|---|---|---|---|---|---|
| CN | 106010144 | A | 12 October 2016 | CN | 106010144 | B | 23 April 2019 |
| US | 4447520 | A | 08 May 1984 | CA | 1200559 | A | 11 February 1986 |
| | | | | JPS | 5877890 | A | 11 May 1983 |
| | | | | JPH | 0457677 | B2 | 14 September 1992 |
| | | | | ES | 515178 | A0 | 01 November 1983 |
| | | | | NO | 822860 | L | 25 February 1983 |
| | | | | NO | 164837 | B | 13 August 1990 |
| | | | | NO | 164837 | C | 21 November 1990 |
| | | | | DE | 3133419 | A1 | 10 March 1983 |
| | | | | DE | 3261467 | D1 | 17 January 1985 |
| | | | | DK | 376982 | A | 25 February 1983 |
| | | | | DK | 158043 | B | 19 March 1990 |
| | | | | DK | 158043 | C | 13 August 1990 |
| | | | | EP | 0073413 | A2 | 09 March 1983 |
| | | | | EP | 0073413 | A3 | 06 April 1983 |
| | | | | EP | 0073413 | B1 | 05 December 1984 |
| | | | | FI | 822872 | A0 | 18 August 1982 |
| | | | | FI | 822872 | L | 25 February 1983 |
| | | | | FI | 71322 | B | 09 September 1986 |
| | | | | FI | 71322 | C | 19 December 1986 |
| CN | 117209168 | A | 12 December 2023 | | None | | |
| CN | 117209674 | A | 12 December 2023 | | None | | |
| CN | 111268923 | A | 12 June 2020 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310540156
- CN 202110299848
- CN 201980013837
- CN 201880036549
- CN 201780082334
- CN 201611141284
- GB 1597231998 T
- GB 1597241998 T